# EUROPEAN PATENT APPLICATION

(11) **EP 1 098 254 A2**
(43) Date of publication of application: **09.05.2001**
(21) Application number: 00123073.9
(22) Date of filing: 24.10.2000
(51) Int. Cl.: G06F 17/30

(54) **Method and apparatus for searching data**

(30) Priority: 02.11.1999 JP 31193199
(71) Applicant: Hitachi, Ltd., Chiyoda-ku, Tokyo 101-8010 (JP)
(72) Inventor: Hirayama, Kenichi, Hitachi, Ltd., Int. Prop. Group, Chiyoda-ku, Tokyo 100-8220 (JP); Suzuki, Tetsuya, Hitachi, Ltd., Int. Prop. Group, Chiyoda-ku, Tokyo 100-8220 (JP); Yamamitsu, Tadashi, Hitachi,Ltd., Int. Prop. Group, Chiyoda-ku, Tokyo 100-8220 (JP)
(74) Representative: Strehl Schübel-Hopf & Partner

(57) **Abstract**

The present invention relates to a method and an apparatus for searching data, as well as a recording medium for executing the method, more particularly to a method and an apparatus for searching data from among mass data, as well as a recording medium for storing a program for executing the method. An embodiment of the present invention provides a data searching method and apparatus for searching data written on a recording medium. The method includes grouping data and graph-plotting the grouped data with use of attribute information (for example, time information, file capacity information, similarity, audience rating, scene switching time, etc.) related to the data, then displaying the data so as to correspond to part of the graph, when the user selects the part of the displayed graph.

## Description

### CROSS-REFERENCES TO RELATED APPLICATIONS

This application is related to and claims priority from Japanese Patent Application No. 11-311931, filed on November 2, 1999.

### BACKGROUND OF THE INVENTION

The present invention relates to a method and an apparatus for searching data, as well as a recording medium for executing the method, more particularly to a method and an apparatus for searching data visually from among mass data, as well as a recording medium for storing a program for executing the method.

Conventionally, a file data displaying method as disclosed in JP-A-No. 7-129448 has been, for example, a method for displaying a file list in which file names and file attributes are displayed. To search target data from among data whose size exceeds a full screen size, the screen is scrolled and the attributes displayed on the screen are checked sequentially. For a picture database, there has been typically one data list displaying method, which displays contracted pictures (thumb-nails). Therefore to display data whose size exceeds the full screen size, the screen is scrolled and attributes displayed on the screen are checked sequentially just like the file list displaying method described above.

Another data display method given in JP-A-No. 10-187743, "Data Display Method," by Aoki Atsushi, et. al. , filed December 26, 1996, shows data displayed on a three dimensional coordinate space. Each document is displayed as a rectangular image, with a document with multiple pages displayed similar to a rectangular box. The two axes of interest are the X-axis and Z-axis. The X-axis shows classification groups, such as a group for documents, a group for images and a group for meeting notes. The Z-axis is a time axis and shows the time order of each item in a group. First, the user assigns each data item in a table the group the data item belongs to. Next the computer arranges the display based on the group and time order of the data item in each group. When the user selects a document then an expanded and more detailed view of the document is displayed. There are several problems with this method. First the user must classify all data items. Second as the classification is based on different types of data, there may be ambiguities in classification. For example a picture in a document, may be a page in a document or a separate image. Third the time interval along the Z-axis must be carefully selected by the user. For example, if there are many documents in the same or similar time interval, then these are very closely spaced on the display. The user must then expand the view to separate out the individual documents. In addition if on the same display there is a document at time far later then the above many documents, then this is placed far out on the Z-axis.

The conventional techniques do not provide an adequate search for target data from among mass data. Typically, reaching the target data needs much time, as many screens need to be scrolled until the data is found. Thus there is a need for an efficient technique for searching mass data.

### SUMMARY OF THE INVENTION

The present invention includes a method and apparatus for searching target data quickly from among mass data. An embodiment of the present invention provides a grouping of data and graph-plotting the grouped data with use of attribute information (for example, time information, file capacity information, similarity, audience rating, scene switching time, etc.) related to the data, then displaying the data so as to correspond to a part of the graph, when the user selects the part of the displayed graph. The attribute information may be information related to a data creating time.

In another embodiment, the data is graph-plotted in accordance with both the time component and the number of data items grouped for a fixed time in the subject file system. For example, when photographed picture data is stored in a file system, the picture data is graph-plotted according to both the photographing time and the number of photographed pictures, thereby it is possible to know at a glance information about at what time pictures are taken most frequently and around what time pictures are taken collectively. Consequently, for example, when picture data taken in summer or winter holidays is stored more than usually, the number of data items in the summer and winter holidays (time component) is increased and it appears obviously on the graph. For example, when picture data taken in summer holidays is to be searched, it is possible to expect that target data will exist in this obvious portion. Therefore, the user just needs to check this portion to search target data. It is also possible to make a fuzzy search that searches data from among time components by enabling part of the graph to be selected with use of a mouse/keyboard input device and displaying a data list involving detailed information of the selected data. For example, in the above illustration, when part of a graph, that is, such a picture taken at the beginning or in the latter half of summer holidays is selected, the detailed information is displayed, thereby the target data can be searched quickly. According to one embodiment of the present invention, when time components and data items are graph-plotted as described above, target data can be searched without knowing the exact time.

The above also applies for such multi-media data as pictures, video data, audio data (e.g., music data), etc. stored in file systems and databases; when both time components and data items are graph-plotted, data distribution can be known at a glance with such attribute information as time components denoting around what time the data is recorded, created, updated, and accessed, as well as such attribute information as file capacity, etc. Target multi-media data can thus be searched easily from among mass data. Furthermore, for document data in a file system and/or a data base, the data distribution can be known at a glance with such attribute information as time components denoting around what time data is recorded, created, updated, and accessed, as well as such attribute information as file capacity, etc. when both time components and data items are graph-plotted. It is thus possible to search target document data easily from among mass data.

In another embodiment of the present invention a recording medium for storing a program that executes the above-described functions is also provided. These and other embodiments of the present invention are described in more detail in conjunction with the text below and attached figures.

### BRIEF DESCRIPTION OF THE DRAWINGS

Fig. 1 is a concept chart for denoting data searching to be carried out with use of a bar graph in the first embodiment of the present invention.
Fig. 2 is a block diagram of an apparatus for realizing the first embodiment of the present invention.
Fig. 3 is a flowchart of a processing for realizing the first embodiment of the present invention.
Fig. 4 is a concept chart for denoting data searching to be carried out with use of a circle graph in the first embodiment of the present invention.
Fig. 5 is a screen for inputting a graph-plotting range in the first embodiment of the present invention.
Fig. 6 is a screen for inputting a grouping unit in the first embodiment of the present invention.
Fig. 7 is a screen for displaying a result of document data searching in the first embodiment of the present invention.
Fig. 8 is a screen for displaying a result of video data searching in the first embodiment of the present invention.

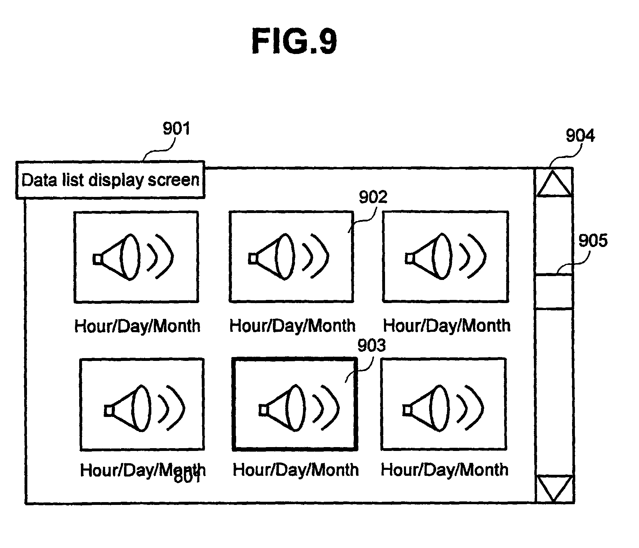

Fig. 9 is a screen for displaying a result of music data searching in the first embodiment of the present invention.
Fig. 10 is a concept chart for denoting data searching carried out according to a file capacity with use of a bar graph in the second embodiment of the present invention.
Fig. 11 is a block diagram of an apparatus for realizing the second embodiment of the present invention.
Fig. 12 is a screen for inputting a graph-plotting range of file capacity in the second embodiment of the present invention.
Fig. 13 is a screen for inputting a grouping unit of file capacity in the second embodiment of the present invention.
Fig. 14 is a concept chart for denoting data searching carried out according to a similarity level with use of a bar graph in the third embodiment of the present invention.
Fig. 15 is a block diagram of an apparatus for realizing the third embodiment of the present invention.
Fig. 16 is a screen for inputting a graph-plotting range of similarity in the third embodiment of the present invention.
Fig. 17 is a screen for inputting a grouping unit of similarity in the third embodiment of the present invention.
Fig. 18 is a concept chart for denoting data searching carried out according to an audience rating level with use of a bar graph in the fourth embodiment of the present invention.
Fig. 19 is a block diagram of an apparatus for realizing the fourth embodiment of the present invention.
Fig. 20 is a screen for inputting a graph-plotting range of an audience rating level in the fourth embodiment of the present invention.
Fig. 21 is a screen for inputting a grouping unit of an audience rating level in the fourth embodiment of the present invention.
Fig. 22 is a concept chart for denoting data searching carried out according to scene information with use of a bar graph in the fifth embodiment of the present invention.
Fig. 23 is a block diagram of an apparatus for realizing the fifth embodiment of the present invention.
Fig. 24 is a screen for inputting a graph-plotting range of scene information in the fifth embodiment of the present invention.
Fig. 25 is a screen for inputting a grouping unit of scene information in the fifth embodiment of the present invention.
Fig. 26 is a concept chart for denoting data search carried out on a screen for which the graph search screen and the data list display screen employed in the first embodiment of the present invention are displayed simultaneously and/or are linked to each other.
Fig. 27 is a concept chart of an embodiment of the present invention for denoting data searching carried out on a data list screen for which the data list display screen and the graph search screen employed in the first embodiment of the present invention are linked to each other.
Fig. 28 is a flowchart of a processing for realizing an embodiment of the present invention in the concept chart shown in Fig. 27.
Fig. 29 is a concept chart of another embodiment of the present invention for data searching for which detailed information is displayed as a graph on the graph search screen employed in the first embodiment of the present invention.
Fig. 30 is a concept chart for denoting data searching to be carried out with use of a bar graph in another embodiment of the present invention.

### DESCRIPTION OF THE SPECIFIC EMBODIMENTS

Hereunder, the preferred embodiments of the present invention will be described in detail with reference to the accompanying drawings.

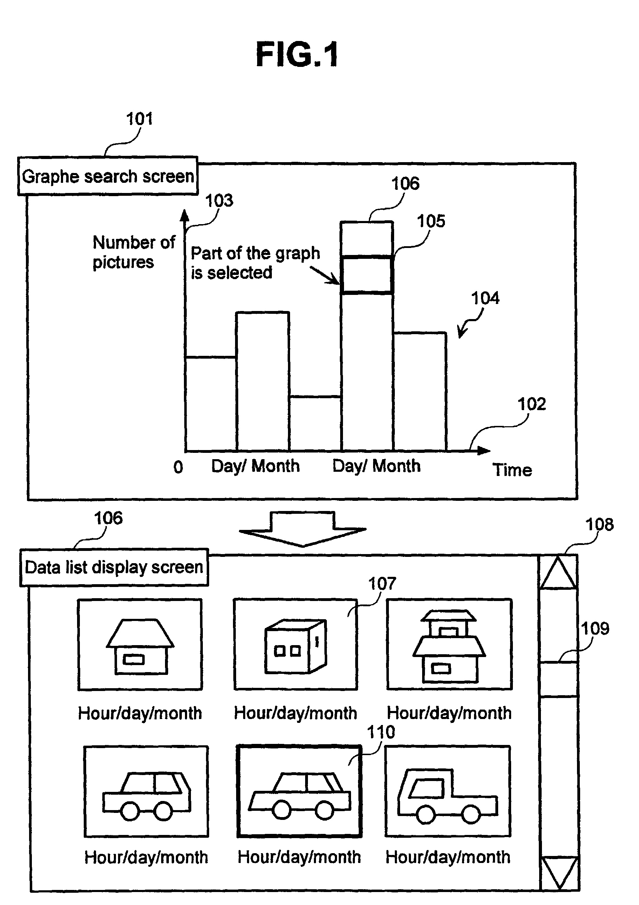

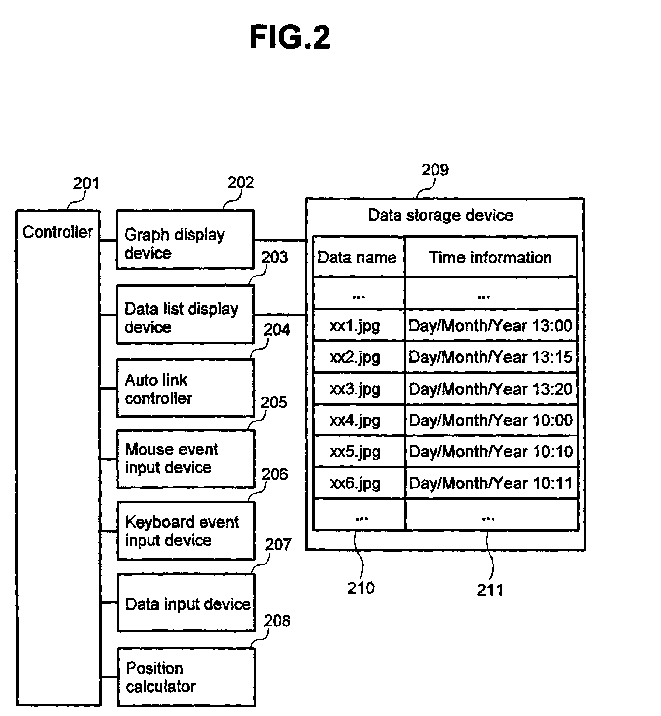

Fig. 1 is a concept chart for denoting picture data searching to be done with use of a bar graph in the first embodiment of the present invention. The picture data to search here is assumed to be stored in a file system. When this embodiment of the present invention is supplied as data searching software, it is installed in an information processing apparatus via such a medium as a CD-ROM, FD, etc. In Figs.1 and 2, a graph search screen 101 has a horizontal axis 102 denoting a time, a vertical axis 103 denoting the number of data items arranged in time order, and a bar graph 104 in which data items are stacked in time order. In Fig. 1, the vertical axis may denote data items arranged in time order and the horizontal axis may denote a time. In each bar of the bar graph 104, data corresponds to a predetermined position in the vertical direction thereof, for example, in accordance with its photographing order. The graph search screen 101 also has a mouse event input device 205 and a keyboard event input device 206 used to pick up part 105 of the graph. For example, to check details of a picture taken in the latter half of a day on which pictures are taken most frequently, upper part (105) of the longest bar of the graph is picked up with the mouse or keyboard. Then, the auto link controller 204 displays or scrolls the data list display screen 106 automatically, starting at the picked-up position in the graph. The data list display screen 106 has frames 107 for displaying such detailed information as contracted pictures (thumb-nails of pictures in image format, for example, JPEG, tiff, GIF, postscript, bmp, and the like), photographing dates (days, times), etc., a scroll bar 109 and a page scroll button 108. Consequently, it is also possible to search other data around the detailed information 110 for the selected part of the graph according to the detailed information displayed on the data list screen 106.

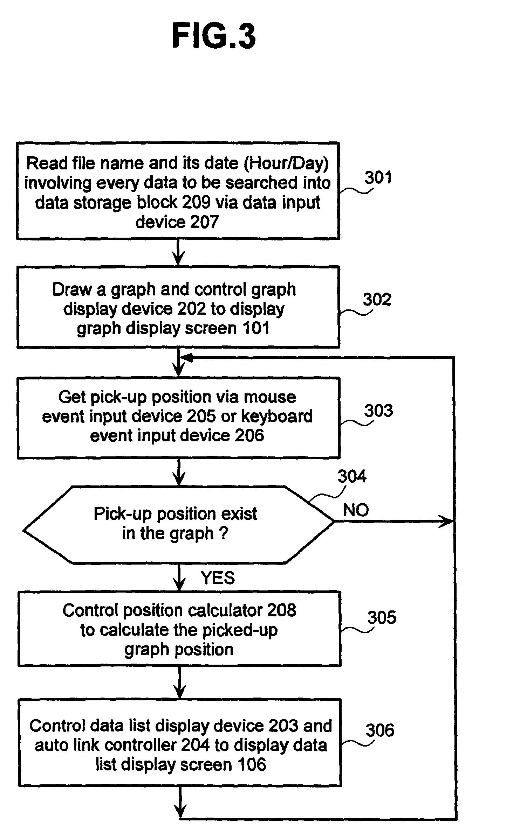

Next, a description will be made for the operation of each component shown in Figs. 1 and 2 according to the flowchart shown in Fig. 3 of an embodiment of the present invention.

At first, a file name is read into the data name field 210 and a date (hour/day) is read into the time information field 211 in the data storage 209 respectively with respect to every data to be searched via the data input device 207 (step 301). Then, the data is grouped by the graph display device 202 in units of a predetermined time, thereby the graph display screen 101 is displayed (step 302). After that, a pick-up position is obtained via the mouse event input device 205 or keyboard event input device 206 (step 303). This picked-up position is checked if it is in the subject graph (step 304). If not in the graph, another mouse event or keyboard event is obtained. If the picked-up position is in the graph, the position calculator 208 calculates the picked-up graph position (step 305). The data list display device 203 and the auto link controller 204 display the data list display screen 106 (step 306). Due to the processing in steps 305 and 306, the graph and the data list can be linked with each other automatically. After step 306 the steps 303 ― 306 may be repeated if the user makes another selection.

While a description has been made for a data searching method applied to a file system in the above embodiment, the method can also apply to various storage systems. For example, the method can apply to a data base in which pictures are stored together with their photographed dates beforehand, then the data base is accessed so as to obtain and graph-plot data in the data base, then link each graph with its data list automatically.

When there are contracted pictures (thumb-nails), etc. to be displayed on the data list display screen 106 and other data related to those contracted pictures, etc., the contracted pictures are further linked with those other data (for example, so as to be corresponded to positions, etc., in which related information items are displayed in other data), thereby the method can apply to a further enhanced data searching system. For example, the present invention can apply to a method as disclosed in United States Patent No. 5,982,979, by Omata et al., titled "Video Retrieving Method and Apparatus," issued Nov. 9, 1999, and assigned to Hitachi, Ltd., Tokyo, Japan, which is herein incorporated by reference in its entirety, when searching a representative picture and/or a content picture.

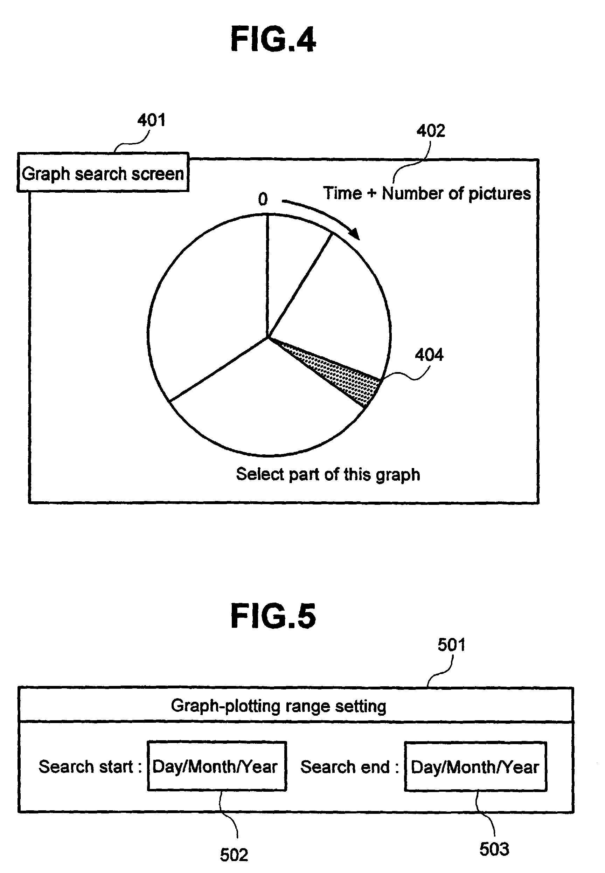

Next, a description will be made for an application example of the above data searching method. In the application example, a circle graph is used to search target picture data stored in a file system in the first embodiment of the present invention. In Fig. 4, a graph display screen 401 displays a relationship 402 between a time and the number of pictures when pictures are grouped in units of a predetermined time. The screen 401 has items 403 divided in a circle graph by a rate of the number of pictures in units of the time, for example, number per hour/day/month, to the total number of pictures. In each of the items the data corresponds to a predetermined position in the clockwise direction thereof, for example, in accordance with its photographing order. The graph searching screen 401 has a mouse event input device 205 and a keyboard event input device 206 used to pick up part 404 of the graph respectively. For example, to check details of a screen photographed in the first half of a day on which pictures are taken most frequently in the displayed graph, the part 404 is picked up with the mouse or keyboard.

Next, a description will be made for how to set a graph-plotting range in the first embodiment of the present invention. In Fig. 5, the graph-plotting range setting screen 501 has a starting day field 502 and an ending day field 503 on which graph-plotting is started so as to search target data and ended. An inputted graph-plotting range is stored in the data storage 209, so that only the data in a specified range can be graph-plotted.

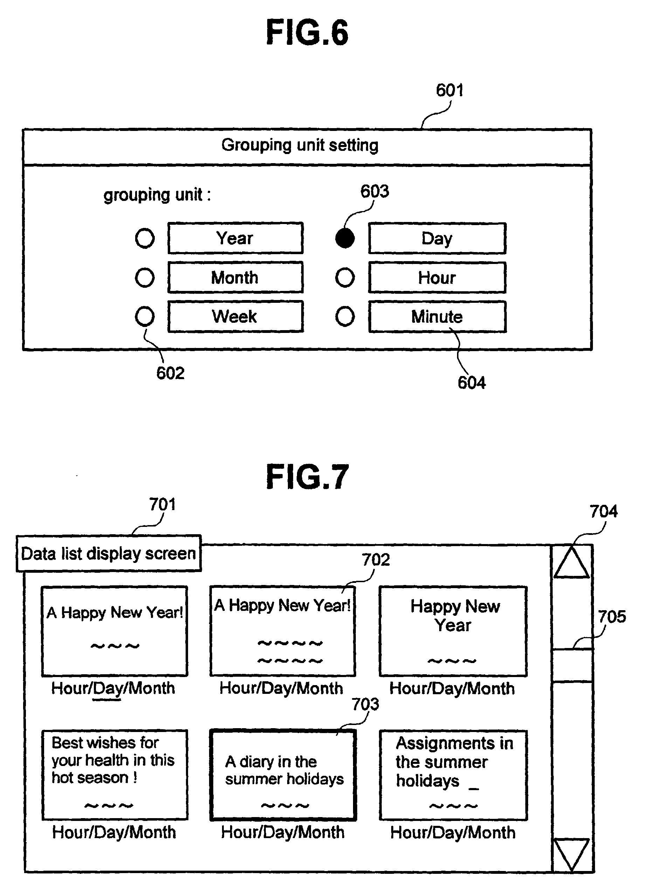

Next, a description will be made for how to set a grouping unit in the first embodiment of the present invention. In Fig. 6, the grouping unit setting screen 601 has display fields, for example, 604 for a grouping unit and select buttons, for example, 602, 603. A grouping unit selected on this screen is defined as a bar on the graph search screen 101.

Next, a description will be made for document searching in the first embodiment of the present invention. As shown in Fig. 1 or 4, both of the creating time and the number of created items of a document are graph-plotted. For example, to check details of a document created in the latter half of a day on which documents are created most frequently in the displayed graph, part 105 of the graph is picked up with the mouse or keyboard. Then, the auto link controller 204 displays or scrolls the data list display screen 701 shown in Fig. 7 automatically, starting at the picked-up position of the graph. The data list display screen 701 has frames for displaying such detailed information as contents, dates of creation, etc. with respect to selected documents, as well as a scroll bar 705 and a page scroll button 704. Consequently, the screen 701 makes it possible to search other data around the detailed information 703 of the selected part of the graph according to the detailed information displayed thereon.

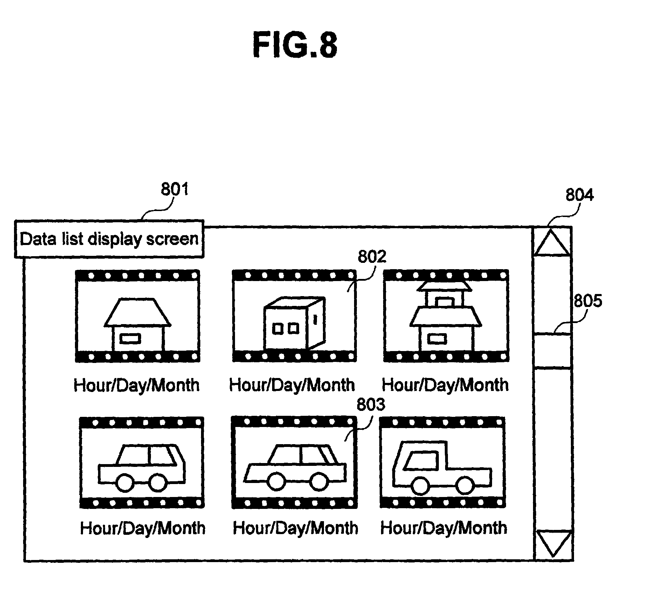

Next, a description will be made for how to search a picture in the first embodiment of the present invention. As shown in Fig. 1 or 4, both of a photographing time and the number of photographed pictures are graph-plotted. For example, to check details of a picture photographed in the latter half of a day on which pictures are taken most frequently in the displayed graph, the subject part (105) of the graph is picked up with the mouse or keyboard. Then, the auto link controller 204 displays or scrolls the data list display screen 801 shown in Fig. 8 automatically, starting at the picked-up position of the graph. The data list display screen 801 has frames 802 for displaying such detailed information as the content, photographing date, etc. of each picture, as well as a scroll bar 805 and a page scroll button 804. Consequently, it is possible to search other data around the detailed information 803 of the selected part of the graph according to the detailed information displayed on the screen 801.

Next, a description will be made for how to search music data in the first embodiment of the present invention. As shown in Fig. 1 or 4, both of the recording time and the number of recorded items of the subject music are graph-plotted. For example, to check details of the subject music recorded in the latter half of a day on which music is recorded most frequently in the displayed graph, the subject part 105 of the graph is picked up with the mouse or keyboard. Then, the auto link controller 204 displays or scrolls the data list display screen 901 automatically, starting at the picked-up position of the graph. The data list display screen 901 has frames for displaying such detailed information as the recording date, etc. of each subject music, as well as a scroll bar 905 and a page scroll button 904. Consequently, it is possible to search other data around the detailed information 903 selected part of the graph according to the detailed information displayed on the screen 901.

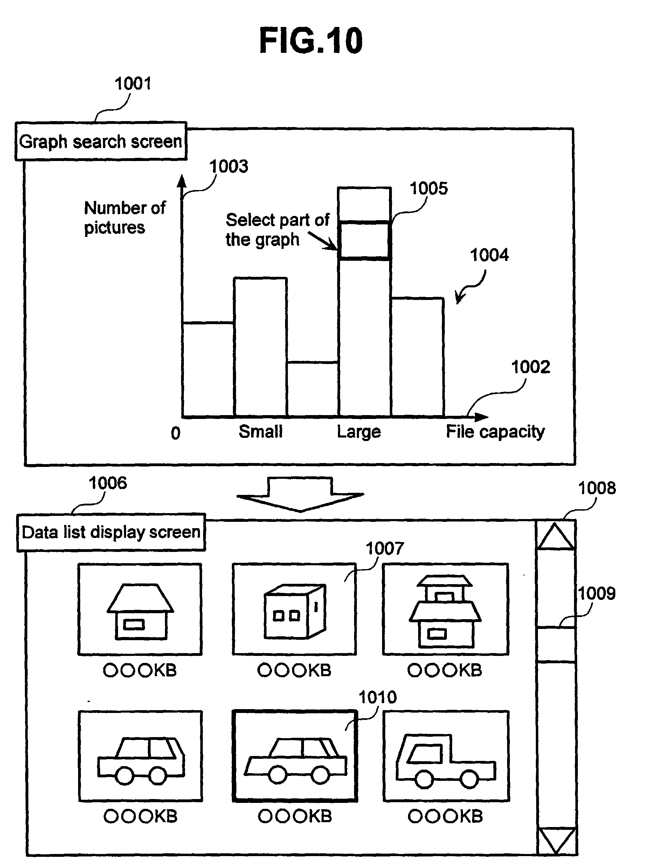

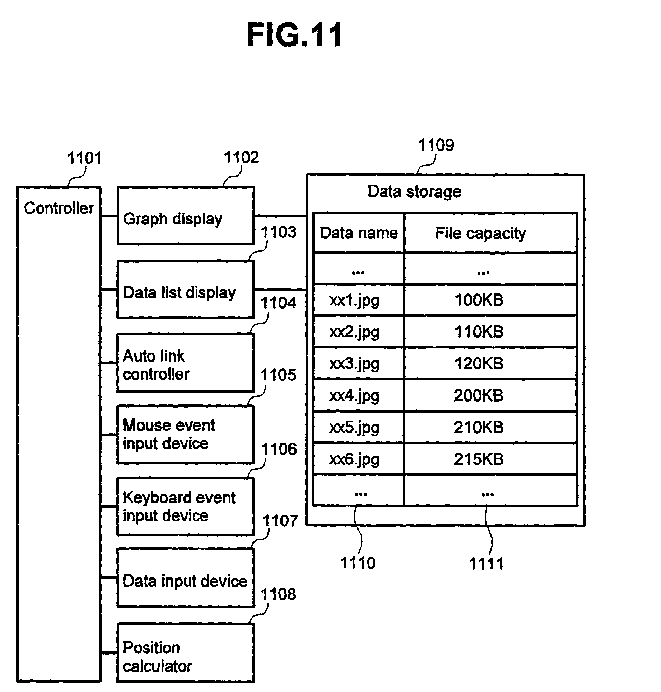

Fig. 10 is a concept chart for searching picture data with use of a bar graph in the second embodiment of the present invention. The picture data is assumed to be stored in a file system. As shown in Figs.10 and 11, a graph search screen 1001 has a horizontal axis 1002 denoting a file capacity, a vertical axis 1003 denoting the number of data items arranged in order of file capacities, and a bar graph 1004 denoting the number of data items stacked in order of file capacities. In each bar of the bar graph 1004, data corresponds to a predetermined position in the vertical direction thereof, for example, in accordance with a file capacity. The graph search screen 1001 has a mouse event input device 1105 and a keyboard event input device 1106 used to pick up part 1005 of the graph. For example, to check details of the largest file capacity picture selected from among large capacity files in the displayed bar graph, upper part 1005 of the longest bar in the graph is picked up with the mouse or keyboard. Then, the auto link controller 1104 displays or scrolls the data list display screen 1006 automatically, starting at the picked-up position. When a file name and a file capacity are to be read into the data storage 1109 via the data input device 1107 as shown in Fig. 11, the file capacity can also be used as a parameter on the graph for searching for the file/data name.

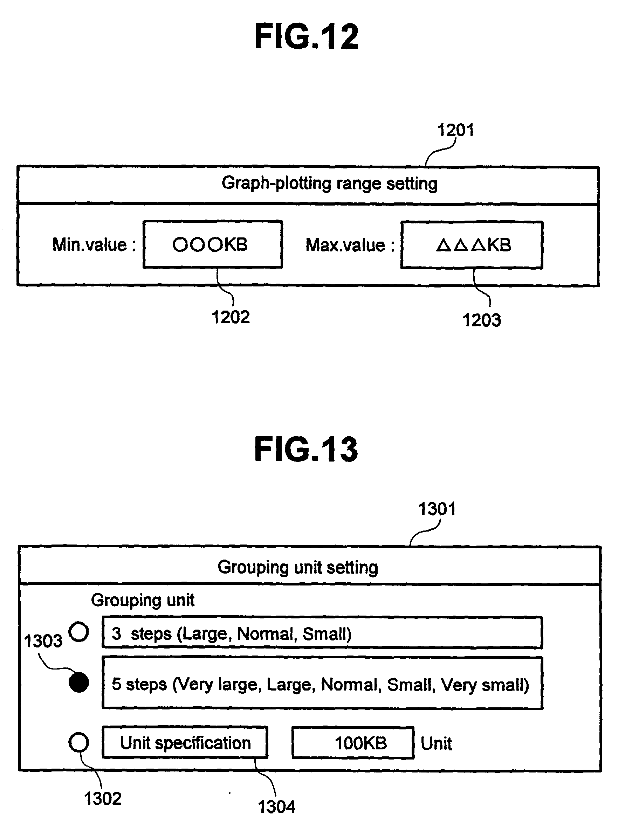

Setting a graph-plotting range in this second embodiment may be as shown in Fig. 12. The graph-plotting range setting screen 1201 has a minimum value field 1202 and a maximum value field 1203 of a file capacity to be graph-plotted for data searching. When such a graph-plotting range is stored in the data storage 1109, only the data in a specific range can be graph-plotted.

Furthermore, setting of a grouping unit in this second embodiment as shown in Fig. 13. The grouping unit setting screen 1301 has grouping unit display fields 1304 and select buttons 1303. A grouping unit selected on this screen is defined as a bar on the graph search screen 1001.

Also in this second embodiment, various combinations are enabled just like in the first embodiment.

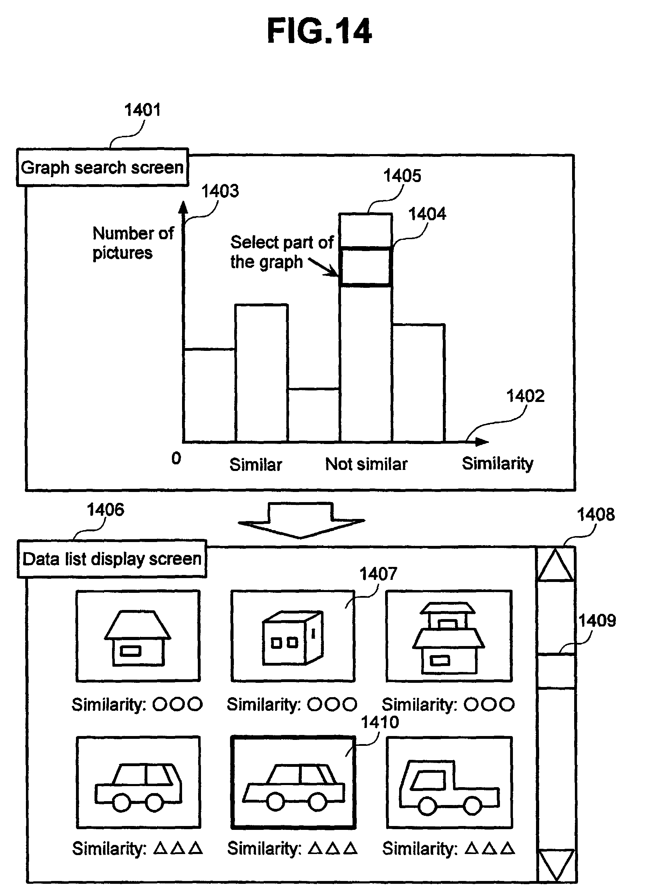

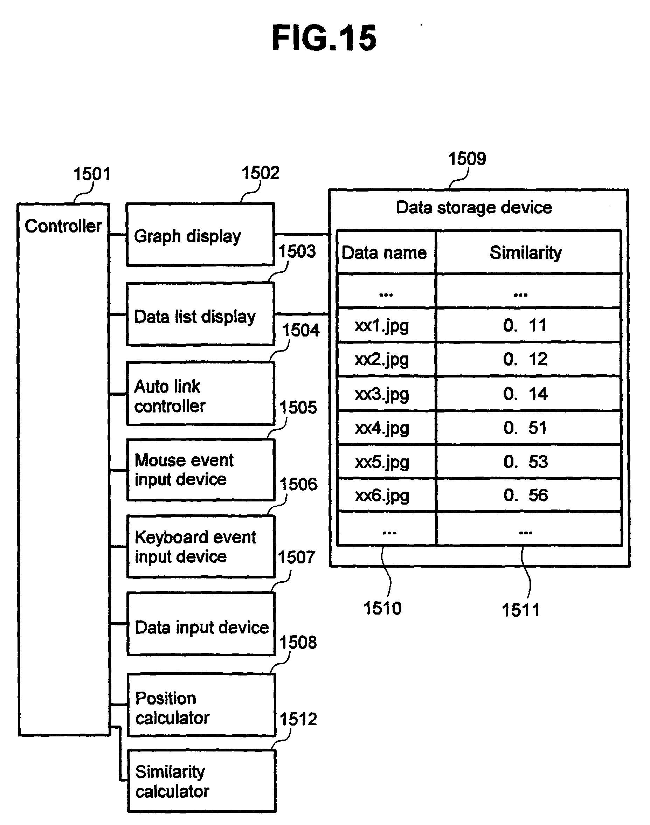

Fig. 14 is a concept chart for searching picture data with use of a bar graph in the third embodiment of the present invention. The picture data is assumed to be stored in a file system. As shown in Figs.14 and 15, the graph search screen 1401 has a horizontal axis 1402 denoting a similarity, for example, a measurement comparing the distance between a feature vector(s) of a picture with a feature vector(s) of another picture, a vertical axis 1403 denoting the number of data items arranged in order of similarity levels, and a bar graph 1404 for stacking the number of data items in order of similarity levels. In each bar of the bar graph 1404, data corresponds to a predetermined position in the vertical direction thereof in accordance with, for example, a similarity distance, which is calculated in similarity calculator 1512. The graph search screen has a mouse event input device 1505 and a keyboard event input device 1506 used to pick up part of the graph 1405 respectively. For example, to check details of the most similar picture selected from among the very similar pictures arranged in the displayed bar graph, upper part 1405 of the longest bar in the graph is picked up with the mouse or keyboard. Then, the auto link controller 1504 displays or scrolls the data list display screen 1406 automatically, starting at the picked-up position of the graph. As shown in Fig. 15, when a file name and a calculated similarity level are read into the data storage 1509 via the data input device 1507, the similarity level can also be used as a parameter of the graph when searching for the file/data.

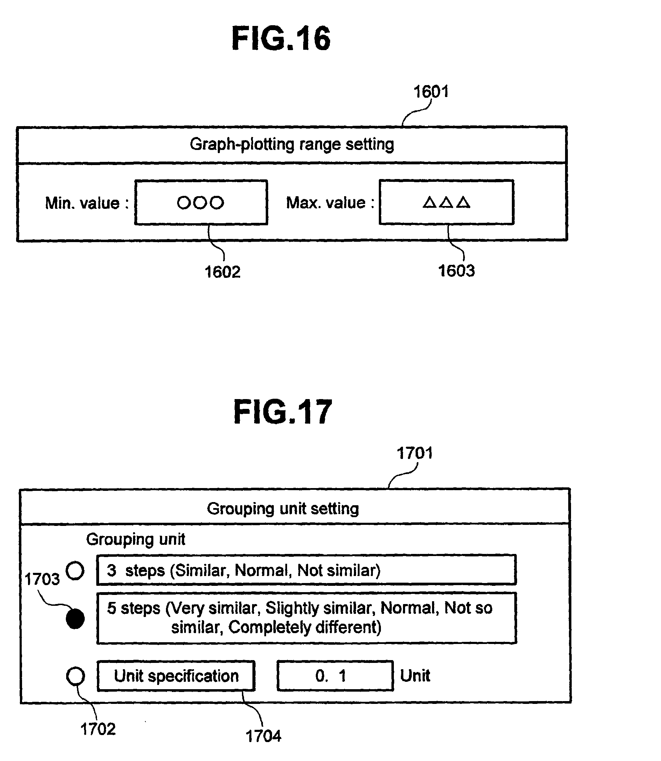

Furthermore, setting of a graph-plotting range in this third embodiment can be done just like that 1601 shown in Fig. 16. The graph-plotting range setting screen 1601 has a minimum value field 1602 and a maximum value field 1603 of a similarity level to be graph-plotted for data searching. When such a graph-plotting range is stored in the data storage 1509 as described above, only the data in a specified range can be graph-plotted.

Furthermore, setting of a grouping unit in this third embodiment can be done just like that 1701 shown in Fig. 17. The grouping unit setting screen 1701 has display fields, for example, 1704 for a grouping unit and select buttons, for example, 1703. A grouping unit selected on this screen 1701 indicates a bar on the graph search screen 1401.

Just like in the first embodiment, various combinations are enabled in this third embodiment, of course.

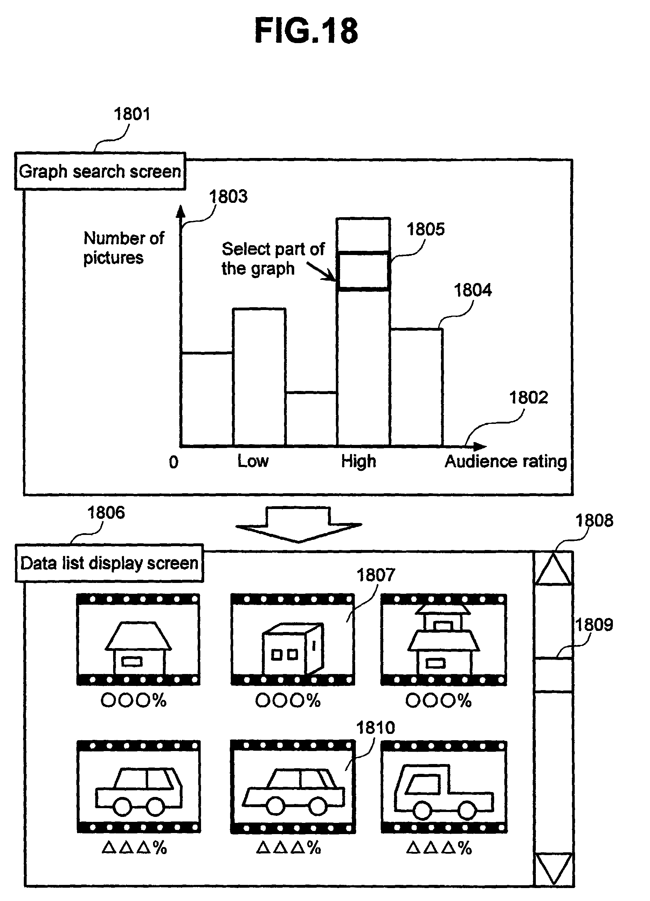

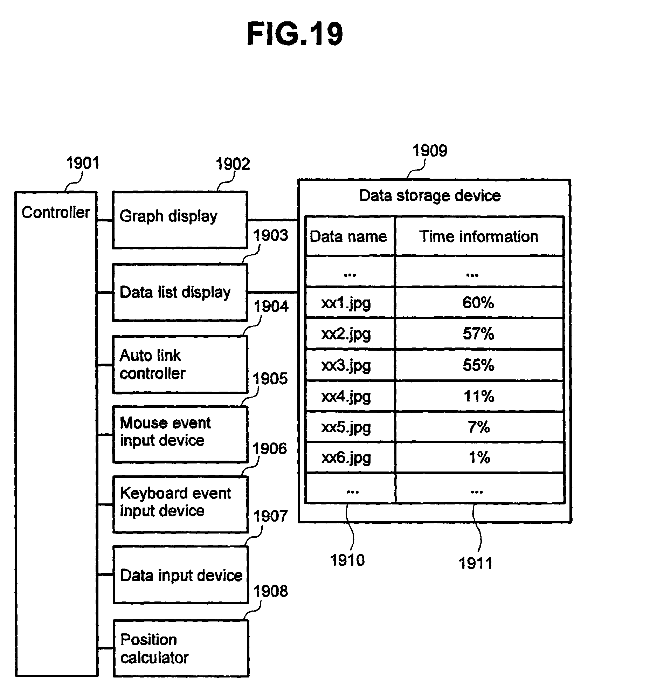

Fig. 18 is a concept chart for searching target picture data with use of a bar graph in the fourth embodiment of the present invention. The picture data is assumed to be stored in a file system. As shown in Figs.18 and 19, the graph search screen 1801 has a horizontal axis 1802 denoting a audience rating level of a program, a vertical axis 1803 denoting the number of programs arranged in order of audience rating values, and a bar graph 1804 for stacking programs in order of audience rating values. In each bar of the bar graph 1804, data corresponds to a predetermined position in the vertical direction thereof in accordance with, for example, an audience rating level. The graph search screen 1801 has a mouse event input device 1905 and a keyboard input device 1906 used to pick up part of the graph respectively. For example, to check details of the highest rating program picture selected from among the very high audience rating programs arranged in the displayed bar graph, upper part 1805 of the longest bar is picked up with the mouse or keyboard. Then, the auto link controller 1904 displays or scrolls the data list display screen 1806 automatically, starting at the picked-up position of the graph. As shown in Fig. 19, when a file name and a calculated program audience rating level are read into the data storage 1909 such way via the data input device 1907, the program audience rating level can also be used as a parameter of the data searching graph.

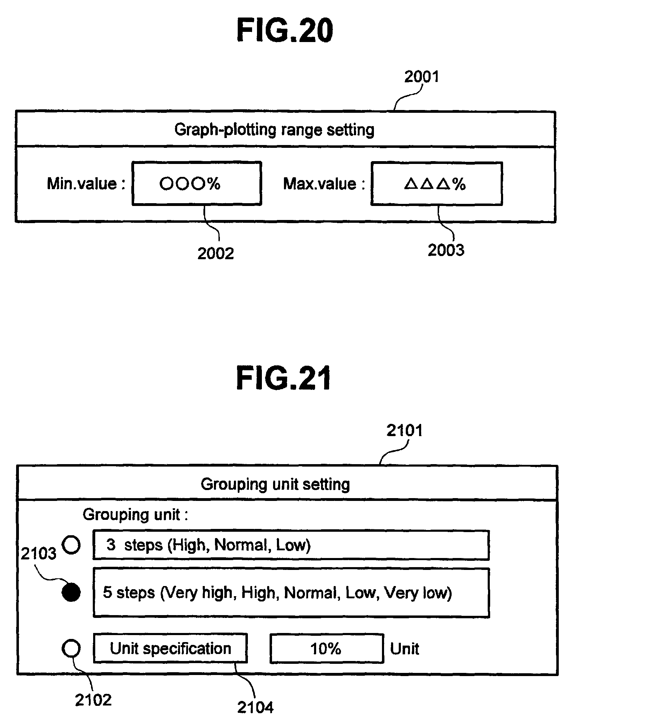

Furthermore, setting a graph-plotting range in this fourth embodiment can be done just like that 2001 shown in Fig. 20. The graph-plotting range setting screen 2001 has a minimum value field 2002 and a maximum value field 2003 of an audience rating level to be graph-plotted for searching. Because the audience rating data is stored in the data storage as described above, only the data in a specified range can be graph-plotted.

Setting of a grouping unit in this fourth embodiment can be done just like that 2101 shown in Fig. 21. The grouping unit setting screen 2101 has display fields, for example, 2104 for a grouping unit and select buttons, for example, 2103. A grouping unit selected on this screen is defined as a bar on the graph search screen 1801.

Just like in the first embodiment, various combinations are enabled in this fourth embodiment, of course.

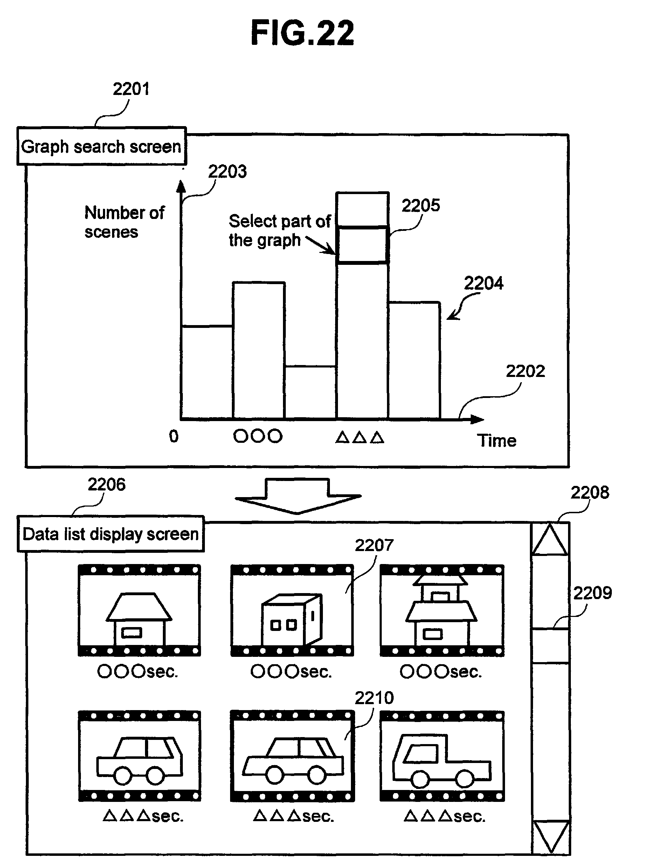

Fig. 22 is a concept chart for searching target movie, MPEG, or video data with use of a bar graph in the fifth embodiment of the present invention. The movie, MPEG, or video data is assumed to be stored in a file system. The fifth embodiment will be more effective when a descriptive language, etc. that can describe switching of scenes with time is used. Concretely, when the number of times for switching scenes at predetermined intervals is graph-plotted, the graph comes to denote, for example, a complex sequence of scenes at a portion with many data items (many scene changes) and a simple sequence of scenes at a portion with a small number of data items (few scene changes).

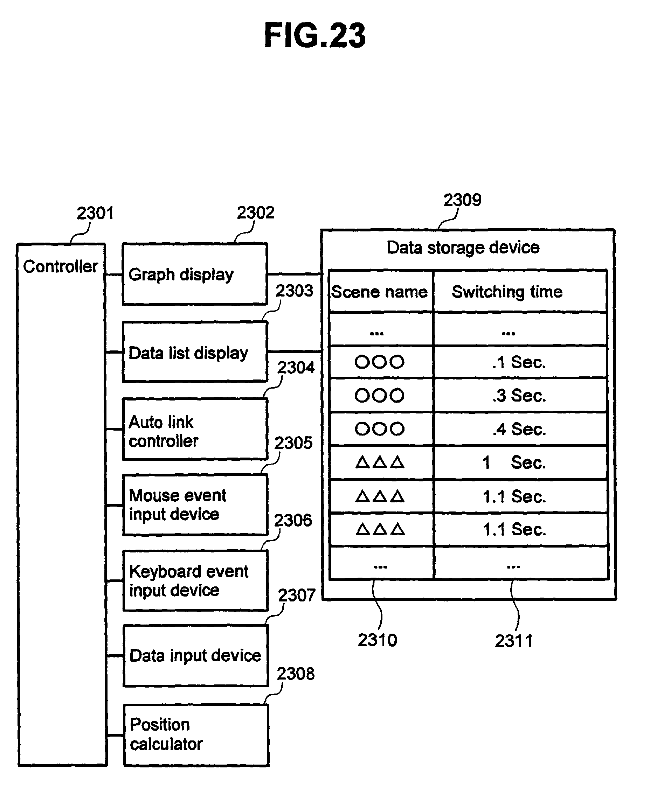

As shown in Figs.22 and 23, the graph search screen 2201 has a horizontal axis 2202 denoting time, in for example units of seconds, and a vertical axis 2203 denoting the number of scenes with switching times arranged in time order, and a bar graph 2204 for stacking scenes in time order. A switching time indicates the time it takes for a scene to change. For example, at 30 scenes per second (about .033 sec per scene), if the switching time is about .1 second, then the first and second scene are similar (e.g., within a predetermined threshold) and there is a scene change in the third scene. Thus for these three scenes the number of scenes with switching times is one. In each bar of the bar graph 2204, data corresponds to a predetermined position in the vertical direction thereof in accordance with, for example, its order to be replayed. The graph search screen 2201 has a mouse event input device 2305 and a keyboard input device 2306 used to pick up part 2205 of the graph respectively. For example, to check details of the latter half portion of a, for example, film or video, with many scene changes, that is, a complex sequence selected from among the scenes arranged in the bar graph, upper part 2205 of the longest bar is picked up with the mouse or keyboard. Then, the auto link controller 2304 displays or scrolls the data list display screen 2206 automatically, starting at the picked-up position of the graph. Each video clip or MPEG file, may display a contracted picture such as the first scene, for example, 2207 or 2210. Upon selection of the contracted picture the entire video clip may be displayed. As shown in Fig. 23, when a scene name and a switching time of scenes is read into the data storage 2309 via the data input device 2307, the searching is enabled.

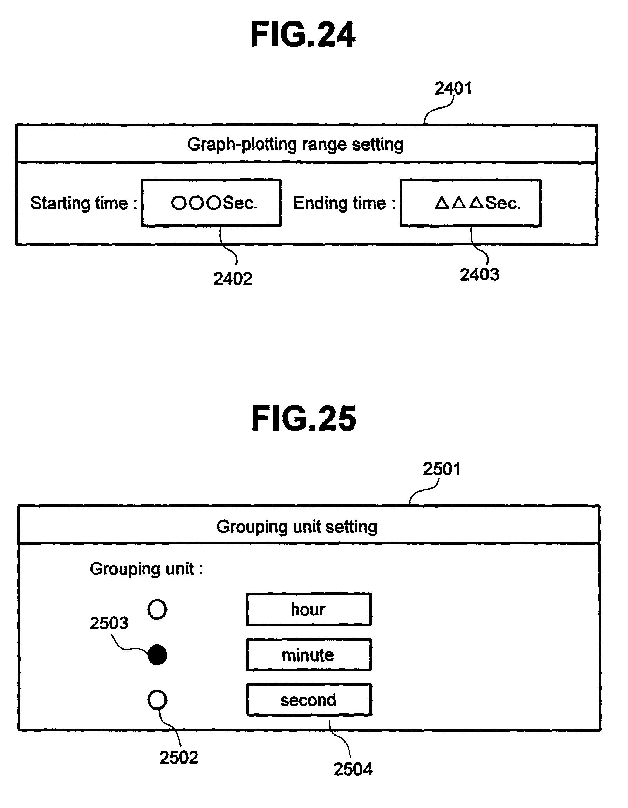

Furthermore, setting a graph-plotting range in this fifth embodiment can be done as shown in Fig. 24. The graph-plotting range setting screen 2401 has a starting time field 2402 and an ending time field 2403 of a picture to be graph-plotted for searching. When such a range is stored in the data storage 2309 as described above, only the data in a specified range can be graph-plotted.

Setting of a grouping unit in this fifth embodiment can be done just like that 2501 shown in Fig. 25. The grouping unit setting screen 2501 has display fields, e.g., 2504 for a grouping unit and select buttons, e.g., 2502, where 2503 is an example of a selected button. A grouping unit selected on this screen is defined as a bar on the graph search screen 2201.

Just like in the first embodiment, various combinations are enabled in this fifth embodiment, of course.

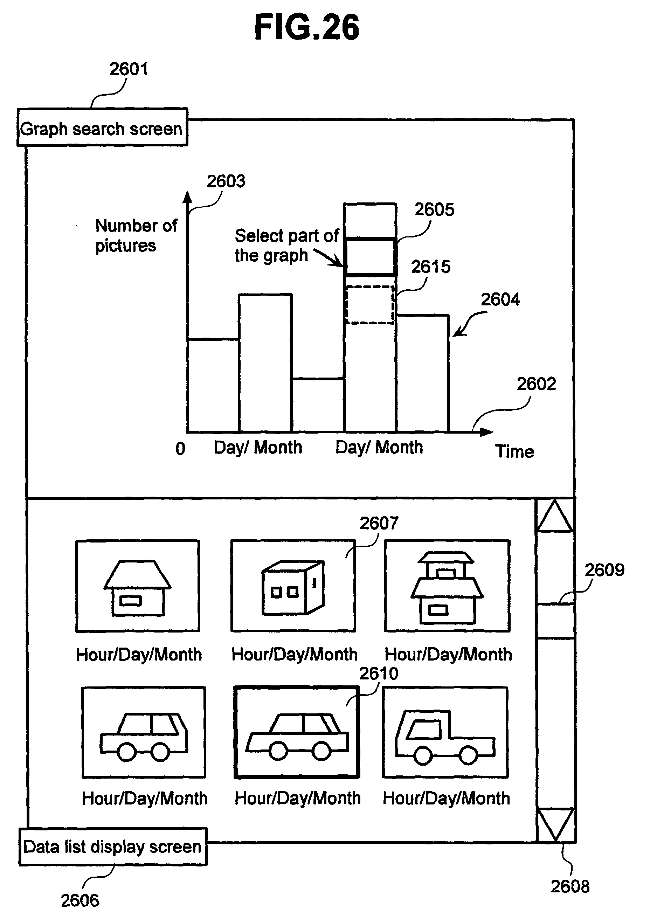

Next, a description will be made for another embodiment of how to display the graph search screen and the data list display screen respectively according to the present invention. In Fig. 26, it is possible to search target data on a screen on which the graph search screen and the data list display screen are displayed at the same time, as opposed to sequentially. In Fig. 26, the graph search screen is displayed above the data list display screen. The graph search screen, however, can be moved to the left, right, and down. A circle graph may be displayed on the graph search screen instead of a bar graph.

In another embodiment of Fig. 26, the graph search screen 2601 is linked to the data list display screen 2606 via a select area 2605. The graph display screen 2601 has a mouse event input device and a keyboard event input device which is used to select one or more of the data items with the mouse or keyboard, for example 2605. Then, the auto link controller marks the selected data position at, for example, contracted picture 2610, on the data list display screen 2606. When, for example, the select area 2605 is moved, another contracted picture such as 2607 corresponding to a new select area, for example, 2615 on graph search screen 2601, may be shown as the selected screen on data list display screen 2606. Another example, displays a first portion of the data corresponding to a first part of the graph in a second window, e.g., 2606, as a first contracted picture, e.g. 2610, when the first part is selected using a selection area, e.g., 2605 shown on the displayed graph, e.g. 2601. The first contracted picture 2610 has a selection indication (for example, bolded borders) as shown in Fig. 26. A second portion of the data corresponding to a second part of the graph is displayed in the second window as a second contracted picture, for example 2607. The second portion of the data is related in series to the first portion of the data, for example, 2607 and 2610 may be photos taken on the same day but at different hours. When the selection area changes selection from the first part of the graph, e.g., 2605, to the second part of the graph, for example, 2615, the selection indication moves from the first contracted picture, e.g., 2610, to the second contracted picture, e.g., 2607, automatically.

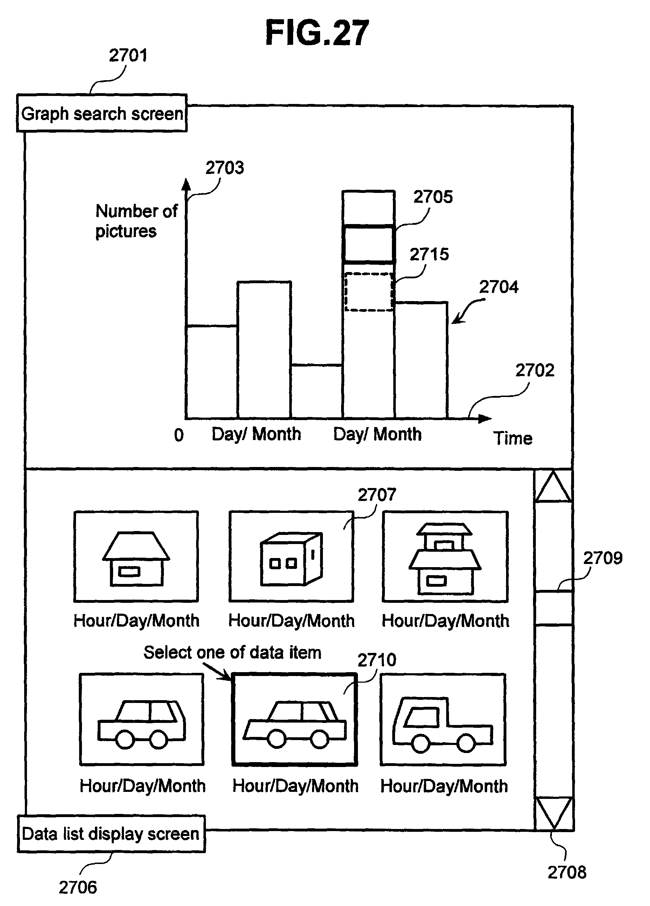

Fig. 27 shows another embodiment for a relationship between the data display screen and the data list display screen. The data list display screen 2706 has a mouse event input device and a keyboard event input device as described above used to select one 2710 of the data items with the mouse or keyboard. For example, to check a position in the whole data, in which a target picture exists, the data item 2710 is selected with the mouse or keyboard. Then, the above-described auto link controller marks the selected data position at part 2705 on the graph display screen 2701. If another data item, for example 2707 is selected on the data list display screen 2706, then the selected data position moves automatically, for example, from 2705 to 2715, on the graph display screen 2701.

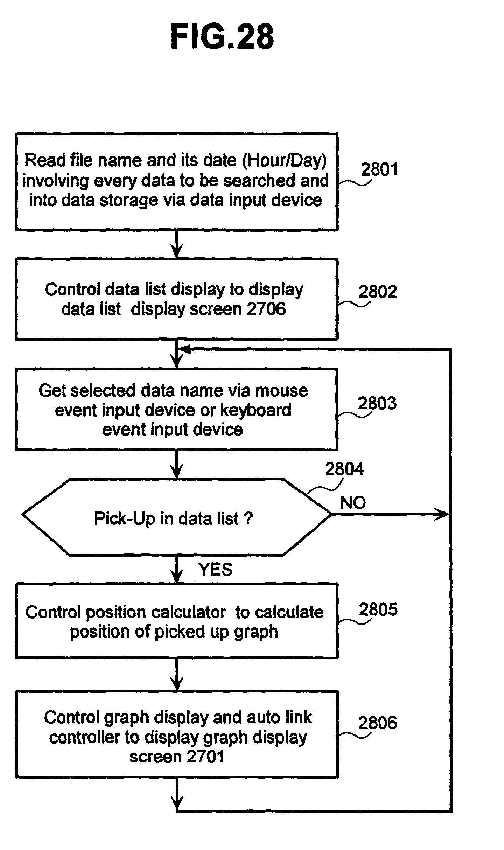

Next, a description will be made for the operation of each component shown in Fig. 27 with reference to the flowchart shown in Fig. 28.

At first, a file name is read into the data name field and a date (hour/day) is read into the time information field of the data storage described above respectively with respect to every target data via the above-described data input device (step 2801). Then, the data list display screen 2706 is displayed via the data list display device (step 2802). After that, the system obtains the selected data name via the mouse or keyboard event input device (step 2803). The system then checks if this picked-up position is in the data list (step 2804). When it is not in the data list, the system obtains another mouse event or keyboard event. When the picked-up position is in the data list, the position calculator calculates the picked-up graph position (step 2805). Then, the graph display device and the auto link controller work together so as to classify the target data into groups in a predetermined unit and display the graph display screen 2701 (step 2806). Due to the processing in steps 2805 and 2806, the graph and the data list can be linked to each other automatically. After step 2806 the steps 2803― 2806 may be repeated if the user makes another selection.

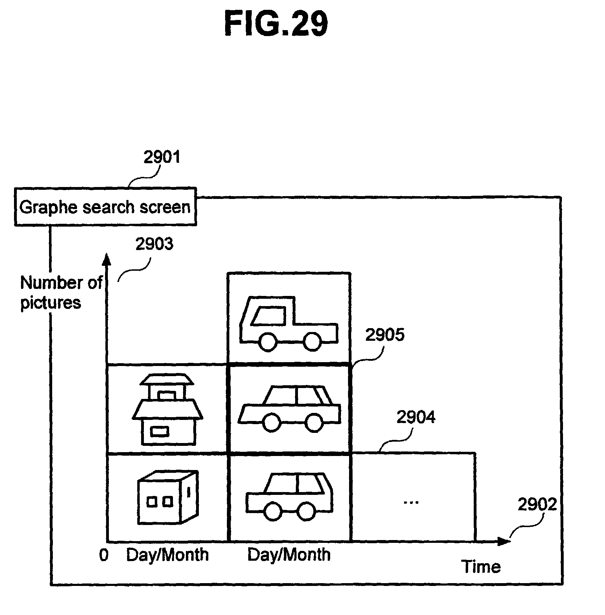

Fig. 29 is another embodiment of the graph search screen. In Fig. 29, the graph search screen 2901 has a horizontal axis 2902 denoting a time, a vertical axis 2903 denoting the number of items arranged in time order, and a bar graph 2904 for stacking contracted pictures (thumb-nails) arranged in time order. To check details of a contracted picture, one 2905 of the graph items is selected, thereby the picture can be expanded on the screen. The graph-plotting on this screen 2901 is not limited only for pictures; when video data is graph-plotted, it can be replayed, when a document is graph-plotted, it can be opened, and when music or other audio is graph-plotted, the music or other audio, can be replayed.

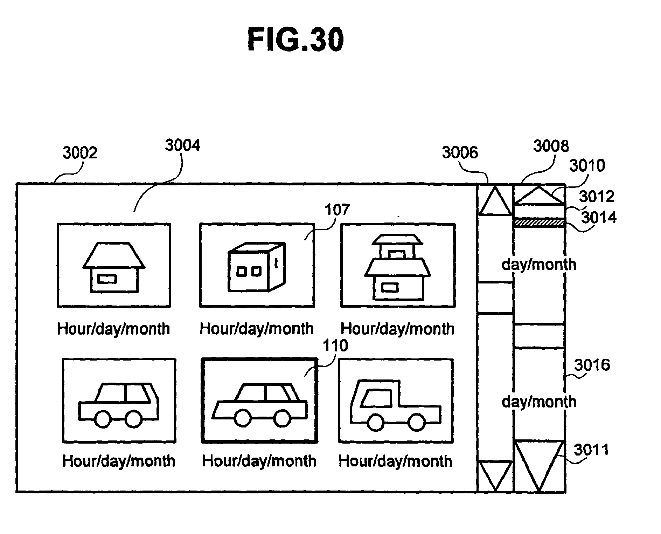

Fig. 30 is a concept chart for denoting data searching to be carried out with use of a bar graph in another embodiment of the present invention. In Fig. 30, the graph search screen 3002 has a display list screen 3004 with associated scroll bar 3006 and a one dimensional stacked bar graph 3008 with scroll tabs 3010 and 3011. The bar graph 3008 has the same bars as in, for example, 104 of Fig. 1, except the bars are arranged end-to-end. This arrangement reduces the screen area needed for the graph search screen. Bar 3012 in Fig. 30 may correspond to bar 106 in Fig. 1 and the selection area 3014 in Fig. 30 may correspond to the selection area 105 in Fig. 1. Thus the display screens 3004 (Fig. 30) and 106 (Fig. 1) are the same or similar. The selection area 3014 also selects frame 110 as in Fig. 1. The bars, e.g., in the bar graph 3008 may be color coded. In one embodiment the frames in the display screen area 3004, include a combination of still images, such as JPEG images, and moving images, such as MPEG video clips. The background color of an image may be the same as the color of the corresponding bar in the bar graph 3008. For example, the background color behind image 110 may be the same as bar 3012. The graph screen 3002 functions like the embodiments for Figs. 1, 26 and/or 27.

Although the above functionality has generally been described in terms of specific hardware and software, it would be recognized that the invention has a much broader range of applicability. For example, the software functionality can be further combined or even separated. Similarly, the hardware functionality can be further combined, or even separated. The software functionality can be implemented in terms of hardware or a combination of hardware and software. Similarly, the hardware functionality can be implemented in software or a combination of hardware and software. Any number of different combinations can occur depending upon the application.

While various embodiments have been described with respect to the present invention, it is to be understood that modifications will be apparent to those skilled in the art without departing from the spirit of the invention; for example, embodiments of the present invention can also apply to data having two or more concepts (attributes, etc.) that can be grouped. (For example, a date is an item that can group both time and data under the same concept.) The present invention is not limited only to those embodiments described above.

## Claims

1. A data searching method for searching data written on a recording medium, the method comprising:
displaying a graphic representation (104, 402) of the data, after the data has been grouped, wherein each item of data is automatically assigned a group using attribute information related to the data; and
displaying a portion (107, 110) of the data corresponding to a part (105, 404) of the graphic representation, when the part is selected from the graphic representation.

2. The data searching method according to claim 1:
wherein the graphic representation is a bar graph (104) in which the attribute information is indicated on a horizontal axis (102) and the number of data items corresponding to the attribute information is indicated on a vertical axis (103).

3. The data searching method according to claim 1 or 2, wherein the attribute information is information related to a data creating time or is selected from a group consisting of time of creation, file capacity, similarity, audience rating, or scene switching time.

4. The data searching method according to any of claims 1 to 3, wherein the method further includes a step of specifying a data range to be displayed.

5. The data searching method according to any of claims 1 to 4,
wherein the method further includes :
corresponding the data to its time position in a movie or video, comprising one or more scenes, for management; and
wherein the displaying of a portion of the data includes displaying some scenes of the movie or video.

6. A data searching method for searching data written on a recording medium, the method comprising:
extracting attribute information related to the data;
plotting the data as a graph (104, 402) using the extracted attribute information;
displaying a portion of the data corresponding to part of the graph as a contracted picture; and
displaying other data, when the contracted picture is selected.

7. A data searching apparatus for searching data written on a recording medium, comprising:
a graph display device (202) for displaying a graph (104, 402) of the data using attribute information related to the data; and
a data list display device (203) for displaying a portion (107, 110) of the data corresponding to part of the visual representation, when the part is selected from the visual representation displayed on the graph display device (202).

8. The data searching apparatus according to claim 7:
wherein the portion displayed on the data list display screen (203) comprises a contracted picture (107, 110) and corresponds to other data related thereto when the data is managed.

9. The data searching apparatus according to claim 8, wherein the other data includes an MPEG file.

10. The data searching apparatus according to claim 9, wherein the contracted picture includes an image file.

11. A recording medium for storing a program readable from a data searching apparatus that uses a display device (203) for displaying a search result;
wherein the program includes:
displaying grouped and plotted data on a graph (104, 402), using attribute information related to the data on the display device; and
displaying a portion (107, 110) of the data corresponding to part (105, 404) of the graph, when the part is selected from the graph.

12. A recording medium for storing a data searching program, the program includes:
extracting attribute information related to the data;
displaying grouped and graph-plotted data (104, 402) using the extracted attribute information;
displaying a portion (107, 110) of the grouped and graph-plotted data corresponding to part (105, 404) of a graph as a contracted picture; and
displaying other data (110) when the contracted picture (110) is selected.

13. A computer readable medium for storing code for displaying a search result, said computer readable medium comprising:
a code for displaying a graphic representation (104, 402) of the data, after the data has been grouped, wherein each item of data is automatically assigned a group using attribute information related to the data; and
a code for displaying a portion (107, 110) of the data corresponding to a part (105, 404) of the graphic representation, when the part is selected from the graphic representation.

14. A computer readable medium for storing code for displaying a search result, said computer readable medium comprising:
a code for extracting attribute information related to the data;
a code for displaying grouped and graph-plotted data (104, 402) using the extracted attribute information;
a code for displaying a portion (107, 110) of the grouped and graph-plotted data corresponding to part (105, 404) of a graph as a contracted picture; and
a code for displaying the other data (110), when the contracted picture (110) is selected.

15. A data searching method for searching data written on a recording medium, the method comprising:
displaying a representation of the data in graphical format (104, 402) in a first window, wherein the representation of the data is arranged using attribute information related to the data;
displaying a first portion (107, 110) of the data corresponding to a first part (105, 404) of the representation in a second window as a first contracted picture, when the first part is selected using a selection area shown on the representation, wherein the first contracted picture has a selection indication, when the selection area is related to the first contracted picture; and
displaying a second portion (107, 110) of the data corresponding to a second part of the representation in the second window as a second contracted picture, wherein the second portion is related in series to the first portion.

16. The data searching method of claim 15 further comprising:
changing the selection indication from the first contracted picture to the second contracted picture, when the selection area changes selection from the first part to the second part.

17. The data searching method of claim 15 or 16 further comprising:
changing the selection area from the first part to the second part, when the selection indication is changed from the first contracted picture to the second contracted picture.

18. A method for visually searching for information items stored in a computer system, said information items ordered by a related attribute, and separated into a plurality of user selected classes, said method comprising:
displaying a first display (101, 401) graphically representing said information items for searching by a user;
receiving a selection of a part (105, 404) of said first display, based on a user selected group of said plurality of user selected groups; and
displaying a second display (106) comprising a plurality of images (107, 110) related to said part for searching by said user.

19. The method of claim 18, wherein the receiving of a selection of a part of said first display further comprises displaying a total number of information items associated with said user selected group and receiving said selection of said part based on a portion of said total number.

20. The method of claim 18 or 19, further comprising:
when said image comprises a still picture, expanding said image;
when said image represents an audio selection, playing said audio selection; and
when said image represents a video or a movie clip, displaying said video or movie clip.

21. The method of any of claims 18 to 20 wherein said first display comprises a bar graph (104) or comprises a pie chart (402).

22. The method of any of claims 18 to 21 wherein the related attribute is selected from a group consisting of time of creation, file capacity, similarity, audience rating, or scene switching time.

23. A method using a computer for searching data items, comprising:
organizing said data items into a plurality of user selected groups, wherein said data items are automatically assigned to said plurality of user selected groups;
displaying a visual representation (104, 402) of said data items to a user, wherein said visual representation displays said plurality of user selected groups;
receiving a user selection (105, 404) of a selected data item from said user; and
displaying an image (107, 110) associated with said selected data item to said user,

24. The method of claim 23 wherein said organizing further comprises determining a number of data items in each user selected group.

25. The method of claim 24 wherein said user selection is based upon said number of data items.

26. The method of claim 24 or 25 wherein said data items are selected from a group consisting of a picture, an audio item, an MPEG file, a JPEG file, or a video item.

27. A method in a computer system for displaying visual search information, comprising:
displaying a horizontal axis (102) indicating a plurality of user selected groups
displaying a vertical axis (103) indicating a number of ordered data items;
wherein for a group of the plurality of user selected groups, displayed on the horizontal axis, displaying a vertical bar indicating a total number of data items in the group and
displaying a selection area (105) for selecting a data item from the vertical bar.

28. The method of claim 27 wherein the data item is an image.

29. A method in a computer system for displaying visual search information, comprising:
displaying a pie chart (402) indicating a set of data items ordered according to an attribute;
displaying a first radius in the pie chart indicating an initial reference point; and
displaying a second radius in the pie chart indicating a number of data items between the reference point and the second radius;
displaying a third radius in the pie chart indicating a number of data items between the reference point and the third radius; and
wherein a selection area (404) comprises an arc area between the second radius and the third radius.

30. The method of claim 29 wherein data items comprise pictures and the attribute is time.

31. A computer readable medium containing a data structure for visually searching for a picture in a plurality of ordered pictures, comprising:
an entry for a time the picture was created;
an entry coupled to a thumbnail for the picture;
an entry for the user selected group the picture is a part of; and
an entry for an order of the picture in the user selected group.

32. A computer system for graphically displaying information to a user for searching, said information comprising a plurality of images, wherein each image comprises an ordering value, said computer system comprising:
a grouping module for arranging said images into groups, wherein a group includes a value indicating a number of images in the group;
a first display module (202) for showing each group and the value of each group;
an input module (205, 206) for receiving a user selection of a selected image from a selected group; and
a second display module (203) for displaying said selected image.

33. The computer system of claim 32 wherein said second display module (203) further displays a second image in sequence with said selected image.

34. A method using a computer for searching data items comprising:
organizing said data items into a plurality of user selected groups, wherein in each user selected group said data items are arranged in a fixed order;
displaying in a window (101) a graphic indication (104, 402) of a group of the plurality of user selected groups;
displaying a user selection (105, 404) of a selected data item from said user; and
displaying an image (107, 110) associated with said selected data item in said window.

35. The method of claim 34 wherein said graphic indication comprises a color code.
